Europäisches Patentamt

European Patent Office

Office européen des brevets

(19)

(11) Publication number: **0 538 397 B1**

# EUROPEAN PATENT SPECIFICATION

(45) Date of publication of patent specification: **08.03.95**

(51) Int. Cl.6: **C04B 35/00**, C03C 14/00, H01B 3/12

(21) Application number: **91914443.6**

(22) Date of filing: **27.06.91**

(86) International application number: **PCT/US91/04376**

(87) International publication number: **WO 92/00929 (23.01.92 92/03)**

(54) **BORON ALUMINUM PHOSPHATES AND BORON ALUMINUM PHOSPHOSILICATES FOR ELECTRONIC PACKAGING.**

(30) Priority: **11.07.90 US 551122**

(43) Date of publication of application:
**28.04.93 Bulletin 93/17**

(45) Publication of the grant of the patent:
**08.03.95 Bulletin 95/10**

(84) Designated Contracting States:
**DE FR GB NL SE**

(56) References cited:
**EP-A- 0 319 146
BE-A- 396 493
GB-A- 461 570
GB-A- 2 209 521
US-A- 3 519 445**

**World Patent Index Latest. accession no. 81-33153D week 19, Der- went Publications Ltd, London, GB**

(73) Proprietor: **E.I. DU PONT DE NEMOURS AND COMPANY
1007 Market Street
Wilmington
Delaware 19898 (US)**

(72) Inventor: **HU, Yung-Haw
1265 Old Bailey Lane
West Chester, Pennsylvania 19382 (US)**
Inventor: **SHANNON, Robert, D.
4 Top of the Oaks Road
Chadds Ford, PA 19317 (US)**
Inventor: **TOMIC, Ernst, Alois
1430 Emory Road
Wilmington, DE 19803 (US)**

(74) Representative: **Jones, Alan John et al
CARPMAELS & RANSFORD
43 Bloomsbury Square
London, WC1A 2RA (GB)**

## Description

Field of the Invention

This invention relates to boron aluminum phosphates (BAPO) and boron aluminum phosphosilicates (BAPOS) having a structure identical or similar to the $\beta$-cristobalite form of $AlPO_4$, to precursors therefor, a process for preparing homogeneous particles of controlled crystallinity, and their use in electronic packaging applications.

STATE OF THE ART

It is well known that circuit packaging can strongly influence the properties of integrated circuits. $Al_2O_3$ is frequently used as the dielectric insulating material in multilayer circuit boards. Recently, however, efforts have been made to lower the dielectric constant (K) of the ceramic insulating material by using $Al_2O_3$ as a filler in conjunction with a lower dielectric constant glass or replacing $Al_2O_3$ (K $\cong$ 10) with a material having a lower dielectric constant. Lowering the dielectric constant of the substrate materials in integrated circuits increases signal propagation velocity, reduces power consumption and minimizes electronic cross-talk, thus allowing higher functional density. Polymeric materials typically offer lower dielectric constants than ceramic materials, but for many applications the reliability, thermal stability, and superior thermal conductivity of ceramic packages make them more desirable. The low-K ceramic dielectrics currently in use are predominantly filled glass systems in which the glass is typically a borosilicate or aluminosilicate composition and the fillers are typically $Al_2O_3$, crystalline silicates or aluminosilicates. One important function of these fillers is to improve the thermal coefficient of expansion to permit matching of the dielectric ceramic to the other components of the circuits. The thermal coefficient of expansion of the dielectric is normally matched either to that of alumina (about 6.2 ppm/°C), silicon (about 3.5 ppm/°C), or GaAs (6.0 ppm/°C).

Often, the glasses used in circuit packaging have a thermal coefficient of expansion less than that required to match the thermal coefficient of expansion of the substrate, e.g., alumina, or of the other components, e.g. silicon, in the circuit. In these instances, the filler materials should have a thermal coefficient of expansion greater than about 4-6 ppm/°C, preferably in the range of about 6-12 ppm/°C, so that the composite thermal coefficient of expansion of the dielectric can be matched to the substrate and/or other components. Fillers used in composite packaging systems should also have a low dielectric constant, good chemical compatibility and should sinter to dense bodies in combination with the glasses of interest.

For low-dielectric constant applications, quartz is commonly used as a high-thermal coefficient of expansion filler. Quartz has a desirably low dielectric constant (about 4.5), a thermal coefficient of expansion of about 10-12 ppm/°C in the temperature range 25°C to about 300°C, and excellent chemical durability. However, quartz undergoes a displacive $\alpha \rightarrow \beta$ phase transition at 573°C, which is accompanied by a relatively large volume change. It is known that this abrupt volume change can cause mechanical instabilities to develop in multilayer systems upon thermal cycling through the phase transition. Although the use temperature of the package does not normally exceed 150-250°C, a large number of re-firings at 850-950°C are typically necessary to fabricate a ceramic multilayer electronic package, so the $\alpha \rightarrow \beta$ phase transition is a disadvantage in quartz-filled systems.

A disadvantage of $Al_2O_3$-based multilayer substrate materials is the high temperature necessary for processing. These high temperatures necessitate the use of the refractory metals Mo or W for metallization. Accordingly, one of the goals of replacing $Al_2O_3$ ceramics is the ability to process at lower temperatures so as to be able to use Cu, Ag or Au metallizations. Temperatures of 800-950°C are desirable.

A further requirement is compatibility of the ceramic or glass-ceramic composite with the metallization components. Compatibility assures that staining and blistering of the ceramic do not occur.

To be useful as a filler in composite dielectrics, a material should have smooth thermal expansion behavior, and not undergo any abrupt volume changes up to at least about 1000°C, and have a thermal coefficient of expansion of about 6-12 ppm/°C in the range 25-300°C. The filler must also be stable in the presence of a glass matrix and molten glass during firing. Of course, the dielectric constant of the material should be as low as possible, preferably less than about 5, and the dielectric loss should be less than about 0.5% tan $\delta$. Finally, the filler powders should have good wetting properties in combination with a variety of glasses, forming dense composites at filler loadings of at least 20-60 volume percent. In particular, the wetting properties of the filler should allow larger filler loadings than are possible with quartz, a filler having high thermal coefficient of expansion often used in low-K electronic packaging applications. Phase-pure materials are preferable for packaging applications, but materials containing small amounts of impurity phases can also be suitable, so long as the predominant phase has the desired properties and the properties of the impurities are not deleterious.

Representative literature publications concerning the stabilization of $\beta$-cristobalite phases in AlPO$_4$-based systems include: Ormiston et al., NASA Report CR-132331 (1973); Horn et al., Trans. Brit. Chem. Soc., 77,158 (1978) and 79,109 (1980); Robinson et al., J. Amer. Chem. Soc., 47, 587 (1964); Kobayashi, J. Chem. Soc. Japan, 72, 94 (1964) and 74,190 (1966); Rey, Z. Krist., 123, 263 (1966); and Florke, Z. Krist, 125, 134 (1967).

Representative patent publications concerning cristobalite phases containing various combinations of $B_2O_3$, $BPO_4$, $Al_2O_3$, $AlPO_4$, $SiO_2$ and $P_2O_5$ include:

U.S. 3,519,445;
U.S. 3,650,783;
U.S. 3,697,550;
U.S. 4,576,920;
U.S. 4,833,104;
J.P. 59-59999; and
G.B. 2,209,521A.

## SUMMARY OF THE INVENTION

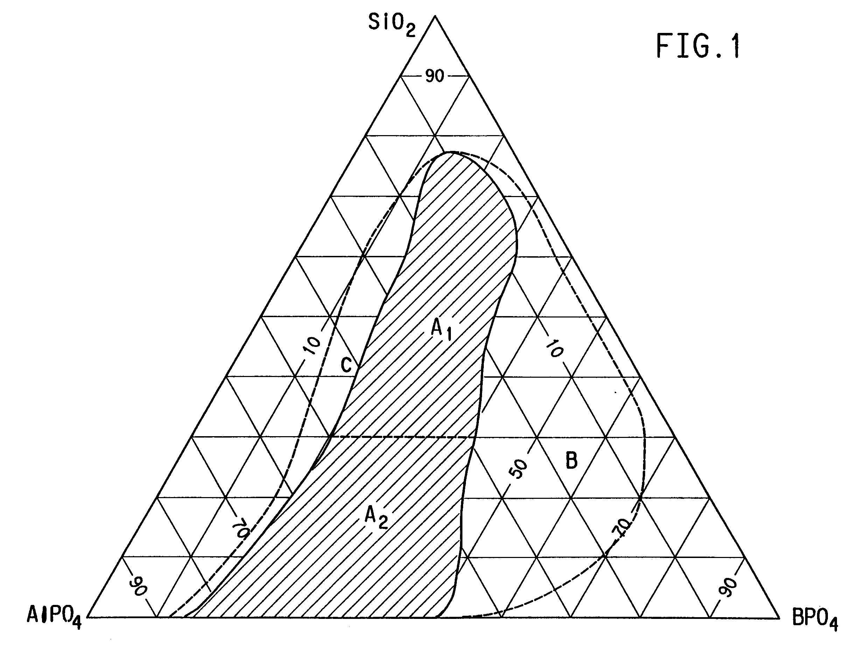

This invention concerns certain boron aluminum silicon phosphate compositions within the region of the $BPO_4$-$AlPO_4$-$SiO_2$ ternary phase diagram outlined in Figure 1 and consisting of 12 to 70% $BPO_4$, 2 to 88% $AlPO_4$ and 0 to 77% $SiO_2$ [6 to 35% $B_2O_3$; 2 to 44% $Al_2O_3$; 12 to 50% $P_2O_5$; 0 to 77% $SiO_2$]. These compositions have the cristobalite crystal structure with cubic or pseudocubic tetragonal symmetry. They are characterized by low dielectric constants of less than about 5.0, preferably less than 4.6, and dielectric loss (tan $\delta$) less than about 0.5%. The invention also concerns aqueous admixture, green powder and amorphous intermediates to such compositions as well as multi-component compositions containing the BAPO and BAPOS of this invention and dielectric components selected from $BPO_4$, glass, silicates, aluminosilicates, phosphates, and the like.

The invention is also directed to a process for the preparation of the stabilized $\beta$-cristobalite form of boron aluminum phosphates (BAPO) and boron aluminum phosphosilicates comprising the sequential steps of:

(i) forming an aqueous dispersion of these oxides, or precursors thereof, on a molar basis:

6 to 35% of $B_2O_3$;
2 to 44% of $Al_2O_3$;
0 to 77% of $SiO_2$; and
12 to 50% of $P_2O_5$; and

(ii) heating the dispersion of step (i) to a temperature of about 600°C to 1200°C for a time sufficient to remove all volatiles.

Stabilized $\beta$-cristobalite can be prepared over the regions A$_1$ + A$_2$ + B specified in the ternary phase diagram of Figure 1. Regions A$_1$ + A$_2$ of Figure 1 describe preferred compositions from 12 to 48% $BPO_4$, 6 to 88% $AlPO_4$ and 0 to 77% $SiO_2$ [6 to 24% $B_2O_3$; 3 to 44% $Al_2O_3$; 12 to 50% $P_2O_5$; 0 to 77% $SiO_2$] that show X-ray diffraction patterns characteristic of $\beta$-cristobalite. Region A$_1$ covers the most preferred compositions of 12 to 40% $BPO_4$, 6 to 50% $AlPO_4$ and 30 to 77% $SiO_2$ [6 to 20% $B_2O_3$; 3 to 25% $Al_2O_3$; 12 to 35% $P_2O_5$; 30 to 77% $SiO_2$]. Region B describes compositions that show X-ray diffraction patterns of both $\beta$-cristobalite and $BPO_4$. This region is less desirable, but to the degree that is determined by the amount of $\beta$-cristobalite present, with glass binders, still allows preparation of sinterable and hermetic low-K multilayer substrates. Region C, although it still shows the presence of $\beta$-cristobalite, also exhibits the presence of $\alpha$-cristobalite, and should therefore be avoided because of the thermal anomaly associated with the $\alpha$ phase.

This invention also concerns various devices including an integrated circuit glass-composite packaging device comprising:

(i) 0 to 85% by weight of total solids, of crystallizable or non-crystallizable glass, and
(ii) 15 to 100% by weight of total solids, of the boron aluminum phosphate and/or boron aluminum phosphosilicate composition of this invention alone, or in combination with other known silicate, aluminosilicate or phosphate dielectric material.

This invention also concerns a tape casting composition comprising the above-described dielectric composition dispersed in a binder polymer, preferably in solution in a volatile nonaqueous solvent.

## BRIEF DESCRIPTION OF THE DRAWINGS

Figure 1 is a ternary phase diagram of $AlPO_4$, $SiO_2$ and $BPO_4$ showing the BAPO and BAPOS $\beta$-cristobalite stability field.

Figure 2 shows the area of BAPO and BAPOS compositions displaying the most desirable sinterability characteristics.

## DETAILS OF THE INVENTION

### I. BAPO and BAPOS Compositions

The stabilized cristobalite compositions of this invention are intended primarily for use in glass composite low-K dielectric systems or as low-K multilayer circuit board dielectric materials that do not incorporate glass. They are also useful in high-temperature structural ceramic or refractory applications where their smooth thermal expansion and thermal stability to >1200°C are important. Fillers for low-K dielectric applications require low dielectric constants, good chemical durability, and good sintering properties and stability in combination with a variety of glasses. Ideally, the filler material will not cause any abrupt volume changes due to phase transitions in the temperature range of multilayer circuit fabrication, namely from about 25 to 950°C.

The crystal structures of the three main forms of $SiO_2$ and $AlPO_4$, quartz, tridymite and cristobalite, are all characterized by frameworks of $SiO_4$, $AlO_4$ or $PO_4$ tetrahedra linked together so that each oxygen atom is common to two tetrahedra to give an infinite network of corner-shared tetrahedra. The $TO_4$ tetrahedra are linked together to form rings which are stacked differently in quartz than in tridymite and cristobalite. The tridymite and cristobalite structures are much more open than the quartz structure which shows up in their densities: quartz 2.655, tridymite 2.30, and cristobalite 2.27 g/mL. Each of these modifications undergoes rapid and generally reversible phase transitions to high temperature forms. An important aspect of this invention is the stabilization of the high temperature $\beta$ form and avoidance of the $\alpha \rightarrow \beta$ transition. The high temperature $\beta$-cristobalite form of $AlPO_4$ is nominally cubic with X-ray diffraction lines at 4.16, 3.603, 2.548 and 2.173 Å. The low temperature $\alpha$ form is orthorhombic and is distinguished from the cubic form by the presence of two additional diffraction lines at about 3.16 and 2.86 Å.

The structures of tridymite and cristobalite resemble sheets of tetrahedra with stacking sequences AC'AC'AC', etc. and ABCABCABC, etc. Strictly speaking, the $\beta$-cristobalite form of $AlPO_4$ is cubic or pseudo cubic with the diffraction lines indicated above. However, some preparations show a weak diffraction line at about 4.3 Å. This has been interpreted as evidence for one-dimensional stacking disorder where the ABCABCABC stacking sequence is interrupted by a small fraction of AC'AC' stacking. These disordered cristobalites are anticipated to show the same lack of structural discontinuities as the high temperature form of cristobalite and would, therefore, be useful as fillers for low K ceramic-glass composites.

We have found that certain composition ranges in the $BPO_4$-$AlPO_4$-$SiO_2$ (BAPOS) system can form powders with an X-ray powder diffraction pattern essentially the same as that of the $\beta$-cristobalite phase of $AlPO_4$ and silica at room temperature. There are no abrupt volume changes in the material upon heating, as in an unstabilized cristobalite phase of $AlPO_4$ or silica at room temperature. The dielectric constant of the stabilized $\beta$-cristobalite of this invention is lower than that of quartz and is useful for low-X electronic packaging.

Small amounts of $Ga^{3+}$ and/or $Fe^{3+}$ can be substituted for Al in $AlPO_4$ and $Ge^{4+}$ for Si in $SiO_2$.

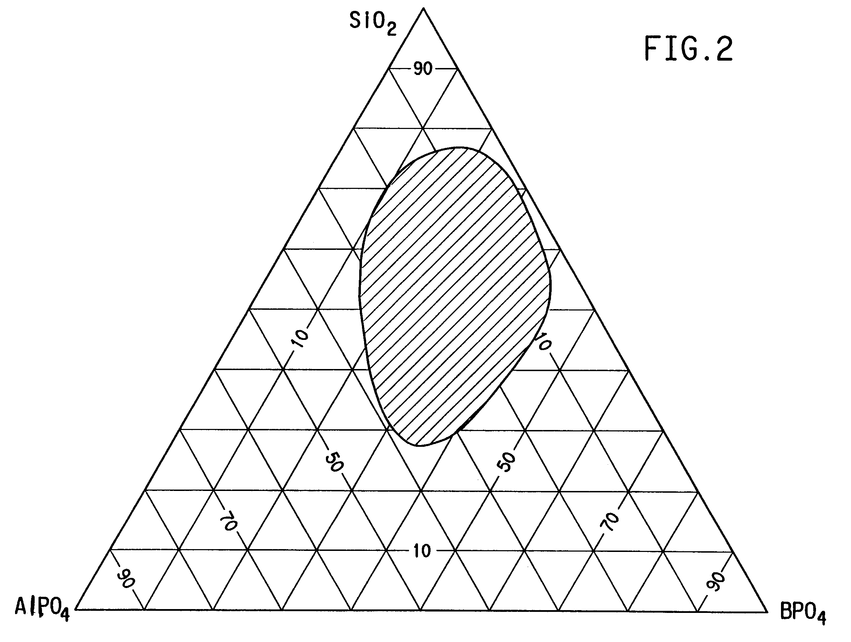

The stabilization of the $\beta$-cristobalite-like phase is achieved by addition to $AlPO_4$ of appropriate amounts of $BPO_4$ and $SiO_2$ in open, unsealed systems at temperatures of 900 to 1150°C. The stabilized $\beta$-cristobalite can be prepared over the region specified in Figure 1 covering approximately 12 to 70% $BPO_4$, 2 to 88% $AlPO_4$ and 0 to 77% $SiO_2$. Preferred compositions shown in the central region of Figure 1 contain 30 to 77% $SiO_2$. Typical compositions have dielectric constants of about 3.7 to 4.5, dielectric loss of about 0.04 to 0.10% at 1 MHz and a thermal coefficient of expansion of about 5 to 12 ppm/°C. The region of exceptional sinterability is shown in Figure 2.

### II. BAPO and BAPOS Intermediates

Intermediates of this invention comprise aqueous admixtures of BAPO and BAPOS precursors as well as the green powder particles formed by drying the aqueous admixtures where green powder refers to dried but uncalcined precursor material. The aqueous admixtures are typically prepared by admixing the precursor for the phosphates of boron and of aluminum with the precursor for the oxide of silica in water,

4

optionally in the presence of free hydroxyl. The weights of BAPO and BAPOS precursors in aqueous solution is that which will produce the disclosed range of BAPO/BAPOS when heated in accordance with the method of this invention.

$Al(NO_3)_3$ and Al-formate are the preferred Al compounds for ceramics intended for electronics applications; Al-acetate can also be used. $H_3BO_3$ is the preferred boron precursor compound. Any other boron precursor can be employed which is water-soluble.

Either a low sodium colloidal silica dispersion, or partially hydrolyzed and, thus, water-miscible tetraethyl orthosilicate are the two preferred silica precursors. Polysilicic acid from sodium silicate by acid ion exchange to assure a low sodium content and tetramethyl orthosilicate are other suitable silicon compounds that can be employed.

$NH_4OH$ can be used as the hydroxyl source. In situ generation of $NH_4OH$ by introducing $NH_3$ gas into the aqueous reaction mixture can be employed. KOH or LiOH can also be employed. Electrolytically generated -OH would be suitable as would -OH added in the form of an ion exchange resin. $H_3PO_4$, $NH_4H_2PO_4$, $(NH_4)_2HPO_4$, and $(NH_4)_3PO_4$ are preferred sources of phosphorus either individually or in combination or in their conjunction with $NH_4OH$, depending on the desired final pH of the dispersion.

Typically, the pH will be less than 5 to provide a clear or translucent aqueous mixture which, optionally, can be contacted with a source of free hydroxyl ion to induce precipitation of the green powder intermediates of this invention. The green powder is formed from droplets of the suspension which are dried. Thus, the green powder is an intermediate stage between the aqueous precursor admixture and the BAPO/BAPOS product of calcination.

Most preferred green powder particles are spherical and have a median diameter of about 1 to 20 microns, preferably 2 to 8 microns. The green powder can be heated up to about 800°C, preferably between 600°C to 700°C to produce a powder which is substantially amorphous when examined by X-ray diffractometry with a tapped density of about 0.4 to 0.9 g/mL, and a surface area of about 2 to 50 $m^2/g$. The amorphous or partially crystallized product is a second intermediate stage between the aqueous precursor and the BAPO/BAPOS product of calcination. Crystalline materials are obtained upon heating the solid green powder to 800°C to 1200°C preferably to 850°C to 1050°C.

III. Aqueous Medium Synthesis Process

The materials of this invention can be synthesized from a water-based mixture containing oxides or precursors of the oxides of silicon, boron, aluminum and phosphorus. This aqueous dispersion process is comprised generally of forming the dispersion, drying to recover an amorphous powder, and calcining at about 800 to 1200°C, preferably from 850°C to 1050°C, for a time sufficient to allow the material to crystallize as stabilized cristobalite. This method is to be contrasted to sol-gel techniques such as disclosed in U.S. 3,767,432 which, in comparison, suffer a number of deficiencies, e.g., use of flammable organic solvents, need for additional processing steps, etc.

The water-based mixture of the present process can contain an organic or inorganic source of silicon and sources of water soluble aluminum, boron and phosphorus compounds. The intermediate can be prepared from said B, Al, Si and P compounds by reacting these in their aqueous solution with hydroxyl ions to form a precipitate or a sol.

The solution can also be prepared by mixing the soluble metal salts (aluminum, boron and phosphorus) with an organic or inorganic source of silicon without a reaction. The soluble metal salts can be any water-soluble salt. For electronic applications, non-halide soluble salts are preferred. The solutions can be prepared in the range of < 1 to 40 weight percent solids. A solids loading of 2 to 8% is preferred for production of finely divided powders. The pH of the final solution can have a range from < 1 to > 11. Colloidal silica sols typically contain from 30 to 50% $SiO_2$. Particularly suitable are colloidal silicas such as those sold under the Ludox® name which are available from E. I. du Pont de Nemours and Co. These sols have pH values of 8.4-11 and the average $SiO_2$ particle is 22 nm in diameter. Another source of $SiO_2$ is tetraethylorthosilicate (TEOS) or tetramethylorthosilicate (TMOS).

In carrying out the process of this invention, it is desirable to maintain uniformity of the aqueous dispersion. This dispersion can be dried by spray drying, freeze-drying, vacuum-drying or agitated pan-drying. Spray drying is the preferred method to produce finely divided spherical powders. The atomization of the slurry can be accomplished by a rotary disk or a fluid nozzle. The particles thus formed range from <1 to >20 $\mu$m in diameter and the median particle diameter is typically between 2 and 15 $\mu$m.

The dried amorphous material can be calcined at temperatures of 600°C to 1200°C. A calcination temperature of 850°C to 1050°C is, however, preferred to avoid the formation of unwanted crystalline phases. The phases formed and the degree of crystallization will be dependent on the composition, crystallization time and calcination temperature.

## IV. Conventional Solid State Reaction

The compositions of the invention can also be prepared by conventional solid state reactions or methods. The reactants, which are preferably reagent or commercial grade oxides, phosphates, hydroxides, hydrates, carboxylates, oxalates, carbonates or the like, are thoroughly mixed in amounts dictated by the desired stoichiometry. Boron and aluminum phosphates are preferred as the source of $B_2O_3$ and $P_2O_5$ to minimize the loss of $B_2O_3$ and $P_2O_5$ by volatilization. Mixing can be done dry by conventional ball milling or grinding in a mortar.

The mixture of reactants is heated in a crucible made of any material which will not react with the product, e.g., $Al_2O_3$, mullite, platinum, silver or gold can be used. The temperature of the reaction must be sufficient so as to allow the components to react. As is the case for many solid state reactions, processing temperatures approximately 100-200°C below the melting temperature of any given composition are generally satisfactory. For the preferred compositions, this corresponds to reaction temperatures of about 800°C to 1150°C.

The reaction time is not critical but should be sufficient to allow essentially complete reaction of the components. Usually 8 to 24 hours is satisfactory. As is well known to those familiar with solid state reactions, in order to promote the completion of the reaction it is frequently advantageous to interrupt the heating and regrind the product. Frequently after one grinding and heating cycle, the reaction is not complete as is evidenced by X-ray diffraction showing two cristobalite phases - one rich in $SiO_2$ and one rich in $BPO_4$. Consequently, the process of successive grinding and heating should be repeated at the same temperature or a higher temperature until there are no impurity phases present as evidenced by the absence of foreign diffraction peaks on an X-ray diffraction pattern. $\alpha$-cristobalite can be detected by diffraction peaks at about 3.16 and 2.86 Å, but preferably the presence of $\alpha$-cristobalite is detected by thermal expansion coefficients as determined by a thermo-mechanical analyzer. A thermal coefficient of expansion greater than about 15 ppm/°C usually indicates the presence of $\alpha$-cristobalite. Upon completion of the heating cycle, the sample can either be air- or water-quenched, or cooled in the furnace.

The compositions of the invention provide stabilized $\beta$-cristobalite phases that have good sintering properties in both the presence and absence of binder glasses and low dielectric constants and dielectric loss. These compositions have excellent sinterability as noted in the crosshatched region of Figure 2. Generally, temperatures of 950°C to 1150°C are necessary to provide dense hermetic structures. The improved sintering properties of the $SiO_2$-rich compositions in the preferred region of Figure 2 are believed to derive from the presence of a minor glassy phase of unspecified composition that results from the reaction of $BPO_4$, $AlPO_4$ and $SiO_2$. Small amounts of glassy phases are known to enhance sintering.

Small amounts of $\alpha$-cristobalite cause rather large non-linearities in their thermal expansion behavior, due to the large volume change associated with the $\alpha$ to $\beta$ cristobalite phase transition at about 180 to 250°C. Minimizing the amount of $\alpha$-cristobalite impurities by the presence of sufficient $BPO_4$ and avoiding region C of Figure 1 is important and yields powder with essentially linear thermal expansion behavior, a desirable property for multilayer integrated circuit packaging since thermal expansion matching between layers is crucial. It is also important to maintain processing temperatures less than about 1150°C to avoid loss of $B_2O_3$ and $P_2O_5$. Loss of $B_2O_3$ destabilizes the $\beta$-cristobalite phase and results in the appearance of $\alpha$-cristobalite and its undesirable thermal expansion anomalies.

The specified $BPO_4$-$AlPO_4$-$SiO_2$ compositions provide stabilized cristobalite materials with low dielectric constants, relatively high thermal coefficient of expansion (about 5-12 ppm/°C) and, surprisingly, sintering and wetting properties alone and in combination with a variety of glasses which are superior to those of quartz. Composites made with stabilized cristobalite and a number of low-K glasses have excellent properties for electronic packaging applications.

Particle sizes can be selected in accordance with the method of application. Thus, if the compositions are to be applied by screen printing, they must be sufficiently small to pass through the printing screen and if they are applied as a green tape, they should be no larger than the thickness of the green tape. Crystalline and metal oxide particles on the order of 1 to 15 microns are preferred.

None of the oxides in the crystalline materials of the invention are reducible when fired under non-oxidizing and/or reducing conditions, i.e., they can be fired under neutral, reducing and oxidative atmospheric conditions.

6

## V. Devices - Multilayer and Thick Film Applications

In their principal application as dielectrics for electronic devices of various kinds, the amorphous or crystalline composition of the invention will generally, in combination with glass and an organic binder, be applied as either a thick film paste or as a green tape, both of which are subsequently fired to effect densification and crystallization, if amorphous, of the solid particles. Such thick film compositions are comprised of finely divided particles of the amorphous or crystalline composition of the invention dispersed in a volatilizable organic medium comprising an organic polymer and a polymeric organic binder dissolved in a volatile solvent. In green tape form, finely divided particles of the amorphous or crystalline composition of the invention are dispersed in a matrix of solvents, plasticizer, and solid organic polymer which are volatilizable or pyrolyzable upon firing.

## VI. BAPO/BAPOS Plus Additional Dielectric Component

Ceramic fillers are combined with glasses to provide hermeticity, low dielectric constants, and to adjust the thermal coefficient of expansion. In this manner, the thermal coefficient of expansion of the dielectric material can be matched with that of components or other substrates. When used as a filler in combination with a borosilicate glass, the BAPO and BAPOS compositions of the invention can be crystalline materials having the $\beta$-cristobalite structure or they can be amorphous intermediates. When used as an amorphous filler material, the subsequent firing of the tape causes the development of the $\beta$-cristobalite phase. It is particularly advantageous to use amorphous BAPOS as a filler because the stabilized $\beta$-cristobalite crystal structure can be obtained at lower temperatures (800 to 950°C) than when the filler is used without a glass (950 to 1150°C). The ceramic filler which can be used in the compositions of the invention can be the BAPO or BAPOS compositions of the invention alone or in combination with other fillers selected from, but not limited to, the group consisting of alumina, quartz, aluminum phosphate, aluminum nitride, boron nitride, fused silica, polycrystalline cordierite, mullite, enstatite, anorthite, spodumene and mixtures thereof.

The ceramic filler can be present in an amount up to 100% by weight based on total inorganic solids. Preferably, it is present in an amount from 40 to 60% by weight. The ceramic filler should be present as finely divided particles. None of the particles should exceed about 15 $\mu$m in size and preferably they should not exceed 10 $\mu$m. It is preferred that the 50% point on the particle size distribution curve be not more than 10 $\mu$m and preferably in the range of 2 to 5 $\mu$m.

## VII. BAPO and BAPOS Plus Glass

The glass compositions which can be used in the invention are, for example, amorphous borosilicate glasses, crystallizable and non-crystallizable phosphate glasses, and silicate glasses such as Zn-silicates and other silicate or aluminosilicate glasses. Although many glasses are suitable for this invention, it is important that the glass be compatible with the $\beta$-cristobalite stabilization process. Certain glasses such as Ba-Ca-Al borate glasses destabilize the $\beta$-cristobalite structure and lead to the development of tridymite which is characterized by its undesirable $\alpha \rightarrow \beta$ transition.

It is preferred that the glass be capable of viscous phase sintering at 850 to 950°C. A particularly preferred glass composition has the composition by weight 72% $SiO_2$, 25% $B_2O_3$, 1% $Al_2O_3$, 1% $K_2O$, 0.5% $Na_2O$ and 0.5% $Li_2O$. In addition, the above-described glasses should contain substantially no Bi, Pb or other large polarizable ions which adversely affect the dielectric constant.

The glass should be present in the amount of 0 to 85% by weight, basis total solids, and preferably 40 to 60% by weight. The strength of the fired layers decreases as the glass concentration increases. The glass should be present as finely divided particles. The particle size, although not critical, is generally less than 25 microns. The preferred particle size is 2 to 6 microns at the 50% point on the distribution curve.

## VIII. Organic Binder for Glass and/or Inorganic Fillers

The organic medium in which the glass and inorganic solids are dispersed is comprised of a polymeric binder which is dissolved in a volatile organic solvent and, optionally, other dissolved materials such as plasticizers, release agents, dispersing agents, stripping agents, antifouling agents and wetting agents.

To obtain better binding efficiency, it is preferred that the weight ratio of inorganic solids to polymer be at least about 4:1 and no greater than 18:1. Within these limits, it is desirable to use the least possible amount of binder in order to reduce the amount of organics which must be removed by pyrolysis and to obtain better particle packing which gives reduced shrinkage upon firing.

In the past, various polymeric materials have been employed as the binder for green tapes, e.g. poly-(vinyl butyral), poly(vinyl acetate, poly(vinyl alcohol), cellulosic polymers such as methyl cellulose, ethyl cellulose, hydroxyethyl cellulose, methylhydroxyethyl cellulose, atactic polypropylene, polyethylene, silicon polymers such as poly(methyl siloxane), poly(methylphenyl siloxane), polystyrene, butadiene/styrene copolymer, poly(vinyl pyrollidone), polyamides, high molecular weight polyethers, copolymers of ethylene oxide and propylene oxide, polyacrylamides, and various acrylic polymers such as sodium polyacrylate, poly(lower alkyl acrylates), poly(lower alkyl methacrylates), and various copolymers and multipolymers of lower alkyl acrylates and methacrylates. Copolymers of ethyl methacrylate and methyl acrylate and terpolymers of ethyl acrylate, methyl methacrylate and methacrylic acid have been previously used as binders for slip casting materials.

A preferred class of polymeric binders for making green tapes for the composition of the invention are those disclosed in U.S. 4,613,648. These polymeric binders are a mixture of compatible multipolymers of 0-100% by weight $C_{1-8}$ alkyl methacrylate, 100 to 0% by weight $C_{1-8}$ alkyl acrylate and 0 to 5% by weight ethylenically unsaturated carboxylic acid or amine, the multipolymer being further characterized as having a number average molecular weight (Mn) of 50,000 to 100,000, a weight average molecular weight (Mw) of 150,000 to 350,000, the ratio of Mw to Mn being no greater than 5.5, the total amount of unsaturated carboxylic acid or amine in the multipolymer mixture is 0.2-2.0% by weight, and the glass transition temperature (Tg) of the polymer and plasticizer therein, if any, is -30 to +45°C.

Frequently, the polymeric binder will also contain a small amount, relative to the binder polymer, of a plasticizer which serves to lower the Tg of the binder polymer. The choice of plasticizers is, of course, determined primarily by the polymer which must be modified. Among the plasticizers which have been used in various binder systems are diethyl phthalate, dibutyl phthalate, dioctyl phthalate, butyl benzyl phthalate, alkyl phosphates, polyalkylene glycols, glycerol, poly(ethylene oxides), hydroxyethylated alkyl phenol, dialkyldithiophosphonate and poly(isobutylene). Of these, butyl benzyl phthalate is most frequently used in acrylic polymer systems because it can be used effectively in relatively small concentrations.

For casting solutions, the solvent component of the organic medium is chosen so as to obtain complete solution therein of the polymer and sufficiently high volatility to enable the solvent to be evaporated from the dispersion by the application of relatively low levels of heat at atmospheric pressure. In addition, the solvent must boil well below the boiling point and decomposition temperature of any other additives contained in the organic medium. Thus, solvents having atmospheric boiling points below 150°C are used most frequently. Such solvents include benzene, acetone, xylene, methanol, ethanol, methyl ethyl ketone, 1,1,1-trichloroethane, tetrachloroethylene, amyl acetate, 2,2,4-triethylpentanediol-1,3-monoisobutyrate, toluene, methylene chloride, 2-propanol and trichlorotrifluoroethane.

## IX. Application and Fabrication of the Devices

The green tape is used primarily as a dielectric or insulating material for multilayer electronic circuits. A roll of green tape is blanked with registration holes in each corner to a size somewhat larger than the actual dimensions of the circuit. To connect various layers of the multilayer circuit, via holes are formed in the green tape. This is typically done by mechanical punching. However, a sharply focused laser can be used to volatilize the green tape. Typical via hole sizes range from 0.0015 to 0.63 cm. The interconnections between layers are formed by filling the via holes with a thick film conductive ink. This ink is usually applied by standard screen printing techniques. Each layer of circuitry is completed by screen printing conductor tracks. Also, resistor inks or high dielectric capacitor inks can be printed on each layer to form resistive or capacitive circuit elements. Also, specially formulated high dielectric constant green tapes similar to those used in the multilayer capacitor industry can be incorporated as part of the multilayer circuitry.

After each layer of the circuit is completed, the individual layers are stacked and laminated. A confined pressing die is used to insure precise alignment between layers. The laminates are trimmed with a hot stage cutter. Firing is carried out in a standard thick film conveyor belt furnace. Unlike many such dielectric compositions, those of the invention may be fired in oxidizing atmospheres such as air, in non-oxidizing atmospheres such as nitrogen, or in reducing atmospheres such as forming gas or $CO/CO_2$.

## TEST PROTOCOLS

### Particle Size

A sample weighing 0.5 to 0.8 g is added to 80 mL water. After adding 6 drops of DARVAN C dispersant, the sample is sonicated for 10 minutes with a 1/2 inch horn, 200 watts at 90% power. It is then introduced into a Laser Light Scattering Microtrac II Small Particle Size Analyzer. The median particle size, dV50%, is the 50th volume percentile of the particles so analyzed for their size distribution.

Surface Area

The sample is first de-gased by heating at 120°C for 45 minutes and then introduced into a Micrometrics Flowsorb 2300 apparatus where the surface area is determined by gas adsorption from a 30% $N_2$ - 70% He mixture.

Thermal Properties

The thermal expansion coefficients were obtained using a standard thermo-mechanical analyzer. Sintered discs approximately 10 mm in length were used in the experiments run from room temperature to about 800°C at 5°C/minute.

Dielectric Constant and Loss

Ceramic specimens are evaluated using the following procedure. Sample dimensions are measured with a digital gauge capable of measuring 1 $\mu$m. Sample thickness is measured at 4 positions on the circumference and in the center. Typical ceramic specimens consist of sintered discs of diameter 10 mm and thickness approximately 1 mm. Silver electrodes are applied using DuPont conductive Ag composition #4922 and baking at 100°C for 1 hr. The electrodes are applied over the entire parallel surfaces of the sample using a masking technique. Precautions are taken to avoid the presence of electrode material at the edge of the sample.

Dielectric constant measurements are performed with a parallel plate capacitance technique using Hewlett-Packard (P. O. Box 10301, Palo Alto, CA 94303-0890) 4274A and 4275A LCR bridges and fixture 16034B (Test Tweezers) according to the procedure described by Subramanian et al. in Phys. Chem. Minerals 16,741, 1989.

Edge capacitance is calculated from an expression derived from data on standard fused silica, $CaF_2$ and $SrF_2$ (Subramanian et al., 1989):

$$C_e = (.019 \ 1n \ P/t - .043) \ P$$

where P and t are sample perimeter and thickness in cm. Actual capacitance, from which the dielectric constant is calculated, is obtained by subtracting the calculated edge capacitance from the apparent sample capacitance.

The accuracy of the dielectric constant measurements using the above techniques was determined from a series of measurements on standard fused silica. The values observed in these measurements are 3.836 ± .05 for silica compared to 3.826 ± .011 from Bussey et al. (IEEE Trans. on Instrumentation and Measurement, Vol. IM-13: 305-311, 1964), 6.814 ± .07 for $CaF_2$ compared to 6.799 ± .0007 from Andeen et al. (J. Appl. Phys. 42: 2216-2219, 1971), and 6.463 ± .09 for $SrF_2$ compared to 6.4655 from Andeen et al. Thus, the accuracy and precision in the measurement of K for samples having areas of 0.05 - 1.0 $cm^2$ is 0.5 - 1.5%. The largest errors are probably associated with irregularities in sample geometry. Although the error in dielectric loss (tan $\delta$) specified by Hewlett-Packard is ± .0016-.0026, in practice the errors associated with the HP4274A and HP4275A LCR bridges are closer to ± .0004. These bridges measure losses of doped alkaline earth fluorides at levels of 0.002 with errors of 5 to 20% and at levels of 0.0004 to 0.0005 with errors of 50 to 100%.

The following Examples illustrate the invention. Physical properties of the BAPO/BAPOS compositions made in these Examples are summarized in Table 1, hereafter.

EXAMPLES

EXAMPLE 1

Boron aluminum phosphate having the $\beta$-cristobalite crystal structure and nominal composition 10% $BPO_4$/90% $AlPO_4$ (hereafter referred to as BAPO 10/90) was prepared by solid state reaction of $BPO_4$ and $AlPO_4$. A mixture of 2.376 g of $BPO_4$, 24.66 g of $AlPO_4$ and 2.964 g of $AlP_3O_9$ (5% excess $AlP_3O_9$) was ground in an agate ball mill for 2 h using Freon® TMS as a grinding medium and heated in an $Al_2O_3$

crucible at 1100°C for 64 h. The powder product gave a single phase X-ray diffraction pattern characteristic of the $\beta$-cristobalite form of $AlPO_4$ with the major peaks at 4.03 Å and 2.48 Å, corresponding to the (111) and (220) reflections, respectively, of the pseudocubic $\beta$-cristobalite crystal structure. Peaks at about 3.13 Å and about 2.86 Å, corresponding to the pseudocubic (021) and (112) reflections were absent, indicating the absence of the $\alpha$-cristobalite phase. The absence of the $\alpha$ to $\beta$ transition was confirmed by the lack of an endothermic event in a differential scanning calorimetry experiment over the range 25 to 300°C.

EXAMPLE 2

Boron aluminum phosphate having the $\beta$-cristobalite crystal structure and nominal composition 15% $BPO_4$/85% $AlPO_4$ (BAPO 15/85) was prepared by solid state reaction of $BPO_4$ and $AlPO_4$. A mixture of 3.98 g of $BPO_4$ and 26.02 g of $AlPO_4$ was ground in an agate ball mill for 2 h using Freon® TMS as a grinding medium. A portion of the sample was heated in an $Al_2O_3$ crucible at 1100°C for 64 h. The powder product gave a single phase X-ray diffraction pattern characteristic of the $\beta$-cristobalite form of $AlPO_4$ with the major peaks at 4.07 Å and 2.49 Å, corresponding to the (111) and (220) reflections, respectively, of the pseudocubic $\beta$-cristobalite crystal structure. Peaks at about 3.13 Å and about 2.86 Å corresponding to the pseudocubic (021) and (112) reflections were absent, indicating the absence of the $\alpha$-cristobalite phase. Chemical analysis of this sample showed 1.20% B.

EXAMPLE 3

Boron aluminum iron phosphate having the $\beta$-cristobalite crystal structure and nominal composition 10% $BPO_4$/10% $FePO_4$/80% $AlPO_4$ was prepared by solid state reaction of $BPO_4$, $AlPO_4$, $Fe_2O_3$ and $AlP_3O_9$. A mixture of 2.574 g of $BPO_4$, 22.269 g of $AlPO_4$, 1.944 g of $Fe_2O_3$ and 3.212 g of $AlP_3O_9$ was ground in an agate ball mill for 2 h using Freon® TMS as a grinding medium. A portion of this sample was heated in an $Al_2O_3$ crucible at 1100°C for 64 h. The powder product gave a single phase X-ray diffraction pattern characteristic of the $\beta$-cristobalite form of $AlPO_4$ with the major peaks at 4.09 Å and 2.50 Å, corresponding to the (111) and (220) reflections, respectively, of the pseudocubic $\beta$-cristobalite crystal structure. Peaks at about 3.13 Å and about 2.86 Å, corresponding to the pseudocubic (021) and (112) reflections were very weak, indicating the presence of only a small quantity of the $\alpha$-cristobalite phase. Chemical analysis showed a B content of 0.79%.

EXAMPLE 4

Boron aluminum phosphosilicate having the $\beta$-cristobalite crystal structure and nominal composition 20% $BPO_4$/10% $AlPO_4$/70% $SiO_2$ (hereafter referred to as BAPOS 20/10/70) was prepared by solid state reaction of $BPO_4$, $AlPO_4$ and $SiO_2$. A mixture of 2.806 g of $BPO_4$, 1.617 g of $AlPO_4$ and 5.577 g of $SiO_2$ was ground in an agate ball mill for 2 h using sufficient Freon® TMS as a grinding medium and heated in an $Al_2O_3$ crucible at 900°C for 24 h. The powder product gave a single phase X-ray diffraction pattern characteristic of the $\beta$-cristobalite form of $AlPO_4$ with the major peaks at 4.06 Å and 2.49 Å, corresponding to the (111) and (220) reflections, respectively, of the pseudocubic $\beta$-cristobalite crystal structure. Peaks at ~ 3.13 Å and ~ 2.86 Å, corresponding to the pseudocubic (021) and (112) reflections were absent, indicating the absence of the $\alpha$-cristobalite phase. A broad peak centered at ~ 4 Å indicated the presence of an amorphous component. The nominal composition of the sample is $B_{.10}Al_{.05}P_{.15}Si_{.70}O_2$ although the actual composition is not known with certainty because of the formation of the amorphous phase.

A sample was prepared in the form of a ceramic disc 0.087 cm x 0.870 cm diameter by pressing the powder product mixed with an acetone-Duco® cement binder in a steel die at an approximate pressure of 113 x $10^6$ Pa and calcining at 1000°C for 4 h. The dielectric constant of this disc was measured to be 4.06 with a dielectric loss factor of 0.08% at 1 MHz.

A second sample prepared in the form of a disc and calcined for 4 h at 1000°C was used to determine the thermal expansion behavior. The thermal expansion coefficient of this sample was found to be 8.9 ppm/°C.

EXAMPLE 5

Boron aluminum phosphosilicate having the $\beta$-cristobalite crystal structure and nominal composition 15% $BPO_4$/15% $AlPO_4$/70% $SiO_2$ (hereafter referred to as BAPOS 15/15/70) was prepared by solid state reaction of $BPO_4$, $AlPO_4$ and $SiO_2$. A mixture of 2.08 g of $BPO_4$, 2.40 g of $AlPO_4$ and 5.52 g of $SiO_2$ was

ground in an agate ball mill for 2 h using Freon® TMS as a grinding medium and heated in an $Al_2O_3$ crucible at 1100°C for 24 h. The powder product gave a single phase X-ray diffraction pattern characteristic of the $\beta$-cristobalite form of $AlPO_4$ with the major peaks at 4.069 Å and 2.490 Å, corresponding to the (111) and (220) reflections, respectively, of the pseudocubic $\beta$-cristobalite crystal structure. Peaks at about 3.13 Å and about 2.86 Å, corresponding to the pseudocubic (021) and (112) reflections were absent, indicating the absence of the $\alpha$-cristobalite phase. A broad peak centered at $\sim$ 4 Å indicated the presence of an amorphous component. The nominal composition of the sample is $B_{.075}Al_{.075}P_{.15}Si_{.70}O_2$ although the actual composition is not known with certainty because of the formation of the amorphous phase.

A sample was prepared in the form of a ceramic disc 0.134 cm x 0.8758 cm diam by pressing the powder product mixed with an acetone-Duco® cement binder in a steel die at an approximate pressure of $113 \times 10^6$ Pa and calcining at 950°C for 4 h. The dielectric constant of this disc was measured to be 4.2 with a dielectric loss factor of 0.1% at 1 MHz.

A sample prepared in the form of a disc calcined at 1000°C for 4 h was used to determine thermal expansion: 8.1 ppm/°C.

### EXAMPLES 6 to 15

Compositions containing various amounts of B, Al, P and Si were made by mixing the amounts of $BPO_4$, $AlPO_4$ and $SiO_2$ dictated by the stoichiometry of the desired composition, and heating the mixtures to temperatures between 800 and 1150°C. X-Ray diffraction patterns indicated the $\beta$-cristobalite structure with different unit cell sizes, depending on the relative amounts of B, Al and Si present. The "d" spacing of the (111) reflection given in column 7 of Table 1 is a relative measure of the unit cell size of the pseudocubic $\beta$-cristobalite structure; deviations from the values of about 4.05 Å for $SiO_2$ and 4.08 Å for $AlPO_4$ represent the effect of the smaller $B^{3+}$ ion on the cell size and the extent of solid solution of $BPO_4$. Sintered discs were prepared from the powders, in order to measure the dielectric constants, dielectric loss factors and thermal expansion coefficients. The compositions, and dielectric and thermal data, shown in Table 1, demonstrate that the $\beta$-cristobalite structure is stable over a wide range of compositions and that the dielectric constants are surprisingly low.

### EXAMPLE 16

This example describes the preparation of BAPOS 36/32/32 from $Al(NO_3)_3$, $H_3BO_3$, $H_3PO_4$, and colloidal silica. This procedure includes a precipitation step.

Solution I: 23.12 g of $H_3BO_3$ and 124.57 g of $Al(NO_3)_3 \cdot 9H_2O$ was dissolved in about 1 L of distilled water, 80.36 g of 85% $H_3PO_4$ diluted to about 250 mL was added and finally 49.93 g of LUDOX® AS40, diluted to about 600 mL, was added and the total volume was brought to 2 L and heated to 60°C.

Solution II: 250 mL conc. $NH_4OH$ was diluted to 2 L and heated to 60°C. Solutions I and II were pumped at a rate of about 200 ml/min by means of a peristaltic tubing pump to the bottom of a cylindrical reactor of 2 L volume. A Eberbach homogenizer (Clifford Wood Inc., NY) operating at about 70% of capacity provided for high speed and high shear mixing of the two liquid streams and a fine dispersion of the resulting precipitate. The residence time in the reactor was 30 s.

The resulting slurry was spray-dried using a Niro spray dryer with its disk spinning at 45M rpm, an inlet temperature of about 300°C and an outlet temperature of about 175°C. The resulting powder was further dried over $P_2O_5$ at about 120°C for about 3 days. Thermogravimetric analysis showed that this powder lost about 36% of its weight ($H_2O$ and $NH_4NO_3$) between 100 and 600°C and an additional 0.4 % to 913°C. After calcination at 1000°C the product showed a sharp XRD pattern characteristic of $\beta$-cristobalite. Analysis by XRF gave the following results:

|  | $SiO_2$ | $Al_2O_3$ | $P_2O_5$ | $B_2O_3$ |
|---|---|---|---|---|
| found % | 20.7 | 17.3 | 51.1 | not det. |
| calculated % | 20.0 | 16.7 | 50.1 | 13.2 |

A portion of this sample was ball-milled and used to prepare a ceramic disc 0.091 cm x 0.760 cm diam by pressing the powder product mixed with a 10% polyethylene glycol binder in a steel die at a pressure of $283 \times 10^6$ Pa and calcining for 16 h at 900°C. Silver electrodes were applied using Du Pont conductive Ag composition #4922 and baking the sample for 1 h at 100°C. The dielectric constant and dielectric loss factor, measured on a Hewlett-Packard 4275A, of the resultant dense, translucent disc was 4.5 and 0.4% at 1 MHz, respectively.

A second ceramic disc was used to determine the thermal expansion coefficient using the thermal mechanical analyzer. A value of 10.5 ppm/°C was determined over the range 25-600°C. No thermal expansion anomalies were observed over this region, confirming the lack of any $\alpha$-cristobalite in this sample.

EXAMPLE 17

This Example describes the preparation of BAPOS 29.6/25.7/44.7 from $Al(NO_3)_3$, $H_3BO_3$, $H_3PO_4$, and colloidal silica. This procedure includes a precipitation step.

Solution I: 20.46 g of $H_3BO_3$ and 107.65 g of $Al(NO_3)_3 \cdot 9H_2O$ was dissolved in about 1 L of distilled water, 70.38 g of 85% $H_3PO_4$ diluted to about 250 mL was added and finally 75.00 g of LUDOX® AS40, diluted to about 600 ml, was added and the total volume was brought to 2 L and heated to 60°C.

Solution II: 250 mL conc. $NH_4OH$ was diluted to 2 L and heated to 60°C. Solutions I and II were pumped at a rate of about 200 mL/min by means of a peristaltic tubing pump to the bottom of a cylindrical reactor of 2 L volume. A Eberbach homogenizer (Clifford Wood Inc., NY) operating at about 70% of capacity provided for high speed and high shear mixing of the two liquid streams and a fine dispersion of the resulting precipitate. The residence time in the reactor was 30 s.

The resulting slurry was spray dried using a Niro spray dryer with its disk spinning at 45M rpm, an inlet temperature of about 300°C and an outlet temperature of about 175°C. The resulting powder was further dried over $P_2O_5$ at about 120°C for about 3 days. Thermogravimetric analysis showed that this powder lost about 32% of its weight ($H_2O$ and $NH_4NO_3$) between 100 and 600°C and an additional 1% to 869°C. After calcination at 1000°C the product showed a sharp XRD pattern characteristic of $\beta$-cristobalite.

A portion of this sample was used to determine the dielectric constant and dielectric loss by the technique of Example 16. The resultant dense, translucent pellet prepared by heating for 16 h at 1000°C resulted in a dielectric constant and dielectric loss of 3.88 and 0.09% at 1 MHz, respectively. X-ray diffraction of a portion of this sample showed a strong $\beta$-cristobalite pattern with major peaks at 3.92 and 2.40 Å. A trace of $BPO_4$ and a broad peak centered at about 4 Å, indicating some amorphous material, was also observed.

The thermal coefficient of expansion over the range 25 to 600°C was found to be 9.5 ppm/°C. No anomalies attributable to the presence of $\alpha$-cristobalite form were observed.

EXAMPLE 18

This Example describes the preparation of BAPOS 11.2/22.8/66.0 from aluminum nitrate, boric acid, phosphoric acid and colloidal silica.

Solution I: 8.76 g of $H_3BO_3$ and 107.79 g of $Al(NO_3)_3 \cdot 9H_2O$ was dissolved in about 1 L of distilled water, 48.81 of 85% $H_3PO_4$ diluted to about 250 mL was added and finally 125.03 g of LUDOX® AS40, diluted to about 600 mL, was added and the total volume was brought to 2 L and heated to 60°C.

Solution II: 250 mL conc. $NH_4OH$ was diluted to 2 L and heated to 60°C. Solutions I and II were pumped at a rate of about 200 mL/min by means of a peristaltic tubing pump to the bottom of a cylindrical reactor of 2 L volume. A Eberbach homogenizer (Clifford Wood Inc., NY) operating at about 70% of capacity provided for high speed and high shear mixing of the two liquid streams and a fine dispersion of the resulting precipitate. The residence time in the reactor was 30 s.

The resulting slurry was spray dried using a Niro spray dryer with its disk spinning at 45M rpm, an inlet temperature of about 300°C and an outlet temperature of about 175°C.

The resulting powder was further dried over $P_2O_5$ at about 120°C for about 3 days. Thermogravimetric analysis showed that this powder loses about 35% of its weight ($H_2O$ and $NH_4NO_3$) between 100 and 600°C and an additional 0.3% between 600 and 900°C. SEM showed the particles to be smooth spheres, about 7 micrometers in diameter. Analysis by XRF gave the following results:

|  | $SiO_2$ | $Al_2O_3$ | $P_2O_5$ | $B_2O_3$ |
|---|---|---|---|---|
| found % | 51.1 | 14.9 | 30.4 | not det. |
| calculated % | 50.0 | 14.6 | 30.4 | 5.0 |

Elemental mapping by EDX showed a pellet pressed from this material to be dense and homogeneous on a micro scale.

X-Ray diffraction patterns of a sample heated at 1000°C for 16 h indicated a strong $\beta$-cristobalite pattern with major peaks at 4.09 and 2.48 Å with a minor peak at 4.28 from tridymite intergrowths and two very weak peaks at 3.16 and 2.88 Å belonging to the $\alpha$-cristobalite phase.

A ceramic disc prepared at 1000°C by the technique described in Example 16 was used to determine a dielectric constant of 4.22 and dielectric loss of 0.09% at 1 MHz. A second ceramic disc was used to determine the thermal coefficient of expansion whose relatively high value of 25.6 ppm/°C in the range 25 to 200°C indicates the effect of the presence of the $\alpha$-cristobalite phase.

### EXAMPLES 19 to 21

These Examples describe the preparation of three different BAPOS compositions by different synthesis methods: (1) where TEOS replaces Ludox® in the current examples, and (2) where $NH_4H_2PO_4$ replaces phosphoric acid.

### EXAMPLE 19

The composition BAPOS 29.6/25.7/44.7 was prepared in the following manner:

Solution I contained 40.9g $H_3BO_3$, 215.3 g of $Al(NO_3)_3 \cdot 9H_2O$, and 142.1 g of $NH_4H_2PO_4$ in about 1 L water. Tetraethylorthosilicate, 214.4 g (Silbond®, 28% $SiO_2$, 90.0% monomer) was added to the aqueous solution which was heated to 65°C and then diluted to about 4 L with deionized water. Solution II consisted of 530 mL of concentrated $NH_4OH$ diluted to about 4 L.

Both solutions were heated to 65°C and pumped at about 200 mL/min, as described in Example 16 into the reactor. After spray-drying in a Bowen spray dryer (150 mL/min injection, 45M rpm, inlet at 390°C, outlet about 200°C), a spherical powder with a dV50% of 7 microns and a powder density (Tapped Density according to ASTM B 527-81) of 0.63 g/mL was obtained. The TGA of the powder showed a weight loss of about 25% in two steps ($H_2O$ and $NH_4NO_3$) between 100 and 600°C. A DTA indicated sintering at about 900°C. This sample, calcined at 1025°C for 8 h, showed a diffraction pattern characteristic of $\beta$-cristobalite.

### EXAMPLE 20

The composition BAPOS 20/20/60 was prepared in a manner similar to Example 19. The quantities of reagents were: 30.3 $H_3BO_3$, 184.0 g of $Al(NO_3)_3 \cdot 9H_2O$, 112.7 g of $NH_4H_2PO_4$, 315.5 g of Silbond® TEOS, and 352 ml conc. $NH_4OH$. The pH of the slurry was 9 prior to spray drying in a Bowen dryer. Spray drying conditions were the same as in Example 19. About 234 g of green powder were recovered which showed a weight loss of about 26% to 600°C and an additional 0.4% to 1000°C. Its DTA plot was unremarkable with softening indicated at about 820°C and an indication of a minor crystallization event at 955°C.

An X-ray diffraction pattern indicated a $\beta$-cristobalite structure with the major peaks at 3.94 and 2.41 Å. The dielectric constant and dielectric loss of a ceramic disc calcined for 4 h at 1000°C was 4.10 and 0.04% at 1 MHz, respectively. The thermal coefficient of expansion determined on a ceramic disc was 10.3 ppm/°C.

### EXAMPLE 21

The composition BAPOS 35/35/30 was prepared by the procedure outlined in Example 19. The quantities of reagents were: 44.3 g of $H_3BO_3$, 268.8 g of $Al(NO_3)_3 \cdot 9H_2O$, 164.7 g of $NH_4H_2PO_4$, 131.7 g of Silbond® TEOS, and 516 mL conc. $NH_4OH$. The pH of the slurry was 9, prior to spray drying in a Bowen dryer to which it was fed at about 160 to 175 mL/min. The inlet temperature was about 350 to 380°C, the outlet temperature was about 190 to 210°C. About 230 g of green powder was recovered, the TGA of which showed a 25% weight loss to 600°C and an additional 0.2% loss to 958°C. Its DTA plot indicated softening by an endotherm at about 800°C. It also indicated that crystallization began at 836°C and peaked at 874°C. X-Ray diffraction patterns of specimens heated to > 1000°C indicated $\beta$-cristobalite and the presence of a tridymite intergrowth phase. A broad peak centered at about 4 Å indicated the presence of a minor amount of an amorphous phase.

The dielectric constant and dielectric loss of a ceramic sample prepared at 1150°C were 3.92 and 0.03%, respectively. The thermal coefficient of expansion was 9.8 ppm/°C.

EXAMPLE 22

This Example shows that aluminum formate is another water soluble salt which can be used in the preparation of BAPOS. Indeed, it is of advantage to use this salt because it produced a product of smaller particle size (dV50 = 2.9 microns) than the nitrate (typically dV50% = 6 to 7 microns) and, upon firing, evolved only $H_2O$, $CO_2$, and CO and not $NO_x$ (from nitrate). Microscopic comparisons showed that powders derived from Al formate also sintered at 1000°C to specimens which had less porosity than those of the same composition but derived from Al nitrate. Elemental mapping by EDX of fired specimens prepared from aluminum formate showed them to be homogeneous on a micro scale. The formate procedure also demonstrated the use of $(NH_4)_2HPO_4$ as the phosphate source as well as the precipitant.

An Osterizer blender was used as the mixer; combined in it were in a total volume of 500 mL: First, 5.2 g of $H_3BO_3$ and 15.2 g of $Al(HCOO)_3 \cdot 3H_2O$, 19.0 g of LUDOX® AS40 were dissolved in about 300 mL hot deionized water and added to the blender. A second solution, 20.4 g of $(NH_4)_2HPO_4$ in 200 mL hot deionized water was then added slowly under high agitation to the first solution in the blender. A precipitate formed; the pH of the resulting slurry was 5.08 and its temperature was 49°C. The slurry was spray dried in a Buchi Spray dryer by injection at 9 mL/min, inlet at 212°C, outlet at 88°C. The resulting green powder had a dV50% of 2.3 microns and a surface area of 13 $m^2/g$ and a powder density of 0.43 g/mL. Pre-calcination at 600°C yielded a product, the DTA of which showed an exotherm, which indicated crystallization at 814°C.

EXAMPLE 23

Boron aluminum phosphate having the $\beta$-cristobalite crystal structure and nominal composition 15% $BPO_4$/85% $AlPO_4$ (BAPO 15/85) was prepared by solid state reaction of $BPO_4$ and $AlPO_4$. A mixture of 7.96 g of $BPO_4$ and 52.04 g of $AlPO_4$, ground in an agate ball mill for 2 h using Freon® TMS as a grinding medium, was heated in an $Al_2O_3$ crucible at 1100°C for 64 h. The powder product gave a single phase X-ray diffraction pattern characteristic of the $\beta$-cristobalite form of $AlPO_4$ with the major peaks at 4.03 Å and 2.47 Å, corresponding to the (111) and (220) reflections, respectively, of the pseudocubic $\beta$-cristobalite crystal structure. Peaks at about 3.13 Å and about 2.86 Å, corresponding to the pseudocubic (021) and (112) reflections were absent, indicating the absence of the $\alpha$-cristobalite phase.

EXAMPLE 24

Boron aluminum iron phosphate having the $\beta$-cristobalite crystal structure and nominal composition 10% $BPO_4$/10% $Fe_2O_3$/80% $AlPO_4$ was prepared by solid state reaction of $BPO_4$, $Fe_2O_3$, $AlP_3O_9$ and $AlPO_4$. A mixture of 5.148 g of $BPO_4$, 3.888 g of $Fe_2O_3$, 6.424 g of $AlP_3O_9$, and 44.538 g of $AlPO_4$ was ground in an agate ball mill for 2 h using Freon® TMS as a grinding medium and heated in an $Al_2O_3$ crucible at 900°C for 24 h. The powder product gave a single phase X-ray diffraction pattern characteristic of the $\beta$-cristobalite form of $AlPO_4$ with the major peaks at 4.07 Å and 2.50 Å, corresponding to the (111) and (220) reflections, respectively, of the pseudocubic $\beta$-cristobalite crystal structure. Peaks at about 3.13 Å and about 2.86 Å, corresponding to the pseudocubic (021) and (112) reflections were absent, indicating the absence of the $\alpha$-cristobalite phase.

EXAMPLE 25

Boron aluminum phosphosilicate having the $\beta$-cristobalite crystal structure and nominal composition 36% $BPO_4$/32% $AlPO_4$/32% $SiO_2$ (BAPOS 36/32/32) was prepared by solid state reaction of $BPO_4$, $AlPO_4$ and $SiO_2$. A mixture of 24.0 g of $BPO_4$, 24.0 g of $AlPO_4$ and 12.0 g of $SiO_2$ was ground in an agate ball mill for 2 h using Freon® TMS as a grinding medium and heated in an $Al_2O_3$ crucible at 1100°C for 64 h. The powder product gave a single phase X-ray diffraction pattern characteristic of the $\beta$-cristobalite form of $AlPO_4$ with the major peaks at 3.86 Å and 2.35 Å, corresponding to the (111) and (220) reflections, respectively, of the pseudocubic $\beta$-cristobalite crystal structure.

EXAMPLE 26

Boron aluminum phosphosilicate having nominal composition 11.2% $BPO_4$/22.8% $AlPO_4$/66.0% $SiO_2$ (BAPOS 11.2/22.8/66.0) was prepared by solid state reaction of $BPO_4$, $AlPO_4$ and $SiO_2$. A mixture of 9.0 g of $BPO_4$, 21.0 g of $AlPO_4$ and 30.0 g of $SiO_2$ was ground in an agate ball mill for 2 h using Freon® TMS as a grinding medium and heated in an $Al_2O_3$ crucible at 1100°C for 64 h. The powder product gave an X-ray pattern characteristic of the β-cristobalite structure with major peaks at 4.02 and 2.49 Å and weak peaks at 3.14 and 2.85 characteristic of the α-cristobalite structure.

## TABLE 1

### PROPERTIES OF BAPO AND BAPOS COMPOSITIONS

| Ex. No. | BPO$_4$ mole% | AlPO$_4$ mole% | SiO$_2$ mole% | T calc °C | Time hr | d(111) Å | κ' | tan δ, % | TCE, ppm/°C |
|---|---|---|---|---|---|---|---|---|---|
| 1 | 10.0 | 90.0 | 0.0 | 1100 | 64 | | | | |
| 2 | 15.0 | 85.0 | 0.0 | 1100 | 64 | | | | |
| 4 | 20.0 | 10.0 | 70.0 | 1000 | 4 | 4.06 | 4.06 | 0.08 | 8.9 |
| 5 | 15.0 | 15.0 | 70.0 | 950 | 4 | 4.07 | 4.20 | 0.10 | 8.1 |
| 6 | 30.0 | 10.0 | 60.0 | 1000 | 4 | 3.94 | 4.36 | 0.09 | 8.4 |
| 7 | 20.0 | 20.0 | 60.0 | 1050 | 4 | 3.94 | 4.21 | 0.07 | |
| 8 | 12.0 | 28.0 | 60.0 | 1100 | 4 | 4.03 | 4.01 | 0.06 | 9.4 |
| 9 | 25.0 | 25.0 | 50.0 | 1150 | 4 | 3.90 | 4.07 | 0.05 | 8.6 |
| 10 | 15.0 | 35.0 | 50.0 | 1150 | 4 | 4.00 | 3.76 | 0.06 | |
| 11 | 30.0 | 30.0 | 40.0 | 1150 | 4 | 3.88 | 4.13 | 0.06 | 5.9 |
| 12 | 18.0 | 42.0 | 40.0 | 1100 | 4 | 3.99 | | | |
| 13 | 35.0 | 35.0 | 30.0 | 1100 | 4 | 3.87 | | | |
| 14 | 40.0 | 40.0 | 20.0 | 1200 | 4 | 3.91 | 3.96 | 0.15 | |
| 15 | 45.0 | 45.0 | 10.0 | 1100 | 4 | 3.88 | | | |
| 16 | 36.0 | 32.0 | 32.0 | 900 | 16 | 3.89 | 4.51 | 0.40 | 10.5 |
| 17 | 29.6 | 25.7 | 44.7 | 1000 | 16 | 3.91 | 3.88 | 0.09 | 9.5 |
| 18 | 11.2 | 22.8 | 66.0 | 1000 | 8 | 4.09 | 4.22 | 0.0010 | 25.6 |
| 19 | 29.6 | 25.7 | 44.7 | 1025 | 8 | 3.86 | | | |
| 20 | 20.0 | 20.0 | 60.0 | 600 | 2 | | | | |
| | 20.0 | 20.0 | 60.0 | 1000 | 4 | 3.94 | 4.10 | 0.04 | 10.3 |
| 21 | 35.0 | 35.0 | 30.0 | 600 | 2 | | | | |
| | 35.0 | 35.0 | 30.0 | 1100 | 4 | 3.91 | 3.92 | 0.03 | 9.8 |
| 22 | 30.0 | 25.0 | 45.0 | 600 | 2 | | | | |
| 23 | 15.0 | 85.0 | 0.0 | 1100 | 64 | 4.03 | | | |
| 25 | 36.0 | 32.0 | 32.0 | 1100 | 64 | 3.86 | | | |
| 26 | 11.2 | 22.8 | 66.0 | 1100 | 64 | 4.02 | | | |
| 27 | 29.6 | 25.7 | 44.7 | 900 | 8 | | | | |

### TABLE 1 (continued)

#### PROPERTIES OF BAPO AND BAPOS COMPOSITIONS

| Ex. No. | $BPO_4$ mole% | $AlPO_4$ mole% | $SiO_2$ mole% | T calc °C | Time hr | d(111) Å | κ' | tan δ, % | TCE, ppm/°C |
|---|---|---|---|---|---|---|---|---|---|
| 28 | 35.0 | 15.0 | 50.0 | | | | | | |
| 29 | 45.0 | 20.0 | 35.0 | | | | | | |
| 30 | 25.0 | 40.0 | 35.0 | 1000 | 4 | 3.93 | 4.09 | 0.04 | |
| 31 | 15.0 | 30.0 | 55.0 | 1000 | 4 | 3.99 | | | |
| 32 | 30.0 | 25.0 | 45.0 | 600 | 2 | | | | |

### EXAMPLES 27 TO 32

These examples demonstrate yet another method of preparation, exemplified by the preparation of the same composition as given in Examples 17 and 19, and for five other BAPOS compositions. In the present method the precipitation of the precursor was omitted which further simplified the method of preparation. LUDOX® AS40 was the source of silica. The molar ratios, quantities of reagents, concentration (% final product in solution) and some physical properties of the product powders are shown in Table 2.

### TABLE 2

#### BAPOS COMPOSITIONS PREPARED FROM ACIDIC SOLUTIONS

| Ex. | Composition moles B/Al/Si | $H_3BO_3$ g | Al(NO$_3$)$_3$ .9H$_2$O g | $H_3PO_4$ g | LUDOX® AS40 g | pH | Pwdr dens | SA | dV 50% |
|---|---|---|---|---|---|---|---|---|---|
| 27 | 29.6/25.7/44.7 | 40.9 | 215.1 | 142.1* | 150 | 1.6 | 0.86 | 18.0 | 7.7 |
| 28 | 35/15/50 | 50.7 | 131.9 | 133.6 | 175.7 | 1.8 | 0.45 | 9.0 | 8.0 |
| 29 | 45/20/35 | 56.4 | 171.1 | 156 | 119.6 | 1.8 | 0.42 | 18.0 | 7.4 |
| 30 | 25/40/35 | 54.7 | 298.7 | 147.5 | 104.5 | 1.5 | 0.58 | 0.7 | 6.9 |
| 31 | 15/30/55 | 20.3 | 243.2 | 135.5 | 178.2 | 1.8 | 0.79 | 3.0 | 7.2 |
| 32 | 30/25/45 | 84.4 | 421.2 | 288.4* | 303 | 2.1 | 0.50 | 4.2 | 6.2 |

*$NH_4H_2PO_4$

Typically, the ingredients, $H_3BO_3$, Al(NO$_3$)$_3$•9H$_2$O, and $H_3PO_4$ (or $NH_4H_2PO_4$) were dissolved in about 1 L of deionized water. To this solution LUDOX® AS40, diluted 1:1, was added, the pH was adjusted to the value shown in Table 2 with $NH_4OH$ and the volume was now brought to 1 gallon. The solution (or better suspension) was injected either into a Niro spray dryer at 30 ml/min, or into a Bowen spray dryer at about 150 mL/min. In either case the wheel spun at 45M rpm, inlet was at about 300°C, the outlet at about 175°C. The resulting green powders were calcined in a rotary kiln at 800°C or 850°C for 2 h. The XRF analysis of one of these products (Example 27) is given below.

|  | $SiO_2$ | $Al_2O_3$ | $P_2O_5$ | $B_2O_3$ |
|---|---|---|---|---|
| found % | 30.9 | 15.0 | 44.4 | - |
| calculated % | 30.0 | 14.6 | 43.9 | 11.5 |

The X-ray diffraction pattern of a sample of BAPOS 25/40/35 heated to 1000°C for 4 h showed strong $\beta$-cristobalite with a minor peak at 4.16 Å from tridymite intergrowth. A ceramic disc prepared at 1200°C by the technique of Example 16 was used to determine a dielectric constant of 4.09 and dielectric loss of 0.09%.

The X-ray diffraction pattern of BAPOS 15/30/55 heated at 1000°C for 4 h showed strong $\beta$-cristobalite with a minor peak at 4.19 Å from tridymite intergrowth.

EXAMPLE 33

Dielectric compositions were formulated by mixing finely divided amorphous crystallizable metaphosphate glass or amorphous borosilicate glass and a phosphate filler consisting of stabilized $\beta$-cristobalite BAPO 15/85 from Example 23). The glasses were prepared by mixing appropriate amounts of the glass components, heating the mixture to form a homogeneous melt, dry quenching the resultant glass on water-cooled rollers, and then dry milling the glass flakes into fine powder.

Casting solutions were formulated by dispersing the dielectric composition in a binder/plasticizer matrix in a volatile non-aqueous solvent in a ball mill. An acrylic binder/plasticizer matrix of the type disclosed in U.S. 4,613,648 was used. Specifically, the binder comprised: (1) 30% by weight terpolymer of 62.3% by weight ethyl methacrylate, 37.1% by weight methyl methacrylate; (2) 50% by weight 1,1,1-trichloroethane; and (3) 20% by weight methyl ethyl ketone. Dioctyl phthalate was the plasticizer and the binder/plasticizer matrix with a binder to plasticizer weight ratio of about 4.5 to 5. The solvent contained the following components in the indicated amounts by weight:

| 1,1,1-trichloroethane | 70-85% |
|---|---|
| methylene chloride | 2-7% |
| methyl ethyl ketone | 4-11% |
| isopropanol | 2-6% |
| 1,1,2-trichloro-1,2,2-trifluoroethane | 4-10% |

The dispersion was achieved by mixing for 6-10 h. The slurry was formed into a tape by casting onto a silicone-coated polyester film at 60°C. The thickness of the cast tape varied between 4 and 10 mils. Samples were fabricated into a substrate geometry by laminating 8 sheets together by means of a confined pressing die operated at 70°C for 20 minutes under $20.7 \times 10^6$ Pa. Laminated parts 2.54 cm x 2.54 cm were preheated at a rate of 5°C/min in air and held at 450°C for 1 h to remove the organic binder. After binder burn-out, the parts were fired at 900°C for 1 h.

Dielectric specimens were fabricated from mixtures of a metaphosphate glass and stabilized $\beta$-cristobalite BAPO 15/85 from Example 23. The formulations (based on the weight percent solids) and dielectric properties of fired tapes of these compositions are listed below:

| Weight % metaphosphate glass | 60 |
|---|---|
| Weight % BAPO 15/85 | 40 |
| dielectric constant | 4.1 |
| dielectric loss | 0.075% |

The thermal expansion of the above filled glass composite was evaluated using a standard Du Pont Series 9000 thermo-mechanical analyzer. The apparatus could detect small amounts of $\alpha$-cristobalite impurities from the abrupt thermal expansion anomaly associated with the $\alpha \rightarrow \beta$ phase transition at about 150-270°C. The tape made with the stabilized $\beta$-cristobalite BAPO 15/85 has a linear thermal coefficient of expansion up to 600°C.

The mechanical integrity and materials compatibility of multilayer electronic packaging systems are often controlled by the thermal expansion matching between the various layers. It is thus important that the dielectric layers have smooth thermal expansion behavior. If the filler shows a large thermal expansion

EP 0 538 397 B1

anomaly, cracking and delamination may occur during circuit fabrication which may result in separation between the substrate and the silicon chips.

EXAMPLES 34 to 39

ILLUSTRATION OF THE DIELECTRIC AND THERMAL EXPANSION PROPERTIES OF GLASS-COMPOSITE TAPES MADE WITH VARIOUS STABILIZED BAPOS COMPOSITIONS

Six multilayer tapes were formulated using the process described in Example 33 to illustrate the variation of thermal expansion properties. Adjusting the thermal coefficient of expansion can be done in order to match or complement that of the dielectric material with active devices or components, or chip carriers or other substrates, such as alumina, aluminum nitride or beryllia, upon which the dielectric material can be mounted to improve thermal conductivity and/or strength.

| Example | 34 | 35 | 36 | 37 | 38 | 39 |
|---|---|---|---|---|---|---|
| metaphosphate glass | 60 | 60 | 60 | -- | -- | -- |
| borosilicate glass | -- | -- | -- | 60 | 60 | 60 |
| BAPOS from Ex. 22 | 40 | -- | -- | -- | -- | -- |
| BAPOS from Ex. 23 | -- | 40 | -- | -- | -- | -- |
| BAPOS from Ex. 24 | -- | -- | 40 | -- | -- | -- |
| BAPOS from Ex. 30 | -- | -- | -- | 40 | -- | -- |
| BAPOS from Ex. 31 | - | -- | -- | -- | 40 | -- |
| BAPOS from Ex. 32 | -- | -- | -- | -- | -- | 40 |
| dielectric constant | 4.2 | 4.0 | 4.3 | 3.7 | 3.8 | 3.7 |
| dielectric loss (%) | 0.14 | 0.17 | 0.057 | 0.091 | 0.1 | 0.085 |
| Thermal Coefficient of Expansion (ppm/°C) | 7.4 | 7.9 | 7.0 | 5.8 | 6.2 | 5.3 |

Tapes made with borosilicate glass have lower dielectric constants than those tapes made with metaphosphate glass. From the dielectric constant measurements, and the known dielectric constants and the densities of the glasses, we estimate the dielectric constants of these BAPOS dielectric fillers to be around 3.8-4.0, similar to the values measured on the fired pellets of BAPOS. In all the cases, the dielectric losses of the glass-dielectric composites are extremely low. A wide range of thermal coefficients of expansion has been achieved by using different glasses with various BAPOS powders. The thermal coefficients of expansion of the crystalline BAPOS powders are around 6.5-7.5 ppm based on the composites thermal coefficient of expansion values (3.2 ppm for borosilicate glass and 7.6 ppm for the metaphosphate glass) obtained from TMA analysis.

EXAMPLES 40 to 45

SINTERABILITY OF BAPOS 29.6/25.7/44.7 WITH VARIOUS AMOUNTS OF BOROSILICATE AND METAPHOSPHATE GLASSES

Six multilayer tapes were made with the BAPOS 29.6/25.7/44.7 from Example 19 using various amounts of borosilicate and metaphosphate glasses according to the formulation process described in Example 33. The microstructures of polished cross-sections of calcined eight-layer laminated tapes were examined by scanning electron microscopy (SEM). The formulations and fired properties of these tapes are given below.

| Example | 40 | 41 | 42 | 43 | 44 | 45 |
|---|---|---|---|---|---|---|
| Wt % metaphosphate glass | 60 | 50 | 40 | -- | -- | -- |
| wt % borosilicate glass | -- | -- | -- | 60 | 50 | 40 |
| Wt % BAPOS 29.6/25.7/44.7 | 40 | 50 | 60 | 40 | 50 | 60 |
| dielectric const. (1 Mhz) | 4.3 | 4.0 | 4.0 | 3.9 | 3.9 | 3.7 |
| dielectric loss (%) | 0.14 | 0.11 | 0.13 | 0.079 | 0.08 | 0.14 |
| thermal coefficient of expansion (ppm/°C) | 7.6 | 8.5 | 7.2 | 6.0 | 6.5 | 6.4 |

18

Sintered density is an important parameter for dielectric systems used in ceramic electronic packaging. Parts with denser microstructures tend to have better insulating properties and are mechanically stronger. Typically, the filler loading which can be practically employed in a filled glass composite is limited by the wetting properties of the filler. However, comparison of the microstructures of the fired tapes indicates that the remnant porosity is independent of the type and amount of glass used. The high densities of these filled glass composites result from the superior wetting properties of the stabilized β-cristobalite BAPOS compositions.

EXAMPLES 46 and 47

COMPARISON OF SINTERING, DIELECTRIC AND THERMAL EXPANSION PROPERTIES OF MULTILAYER TAPES MADE FROM PARTIALLY AND FULLY CRYSTALLIZED BAPOS 29.6/25.7/44.7

Two tapes were formulated using the process described in Example 33 but with a firing temperature of 850°C to demonstrate that the degree of crystallinity of BAPOS powders does not affect the sintering, dielectric and thermal expansion properties of fired glass tape composites. A portion of BAPOS 29.6/25.7/44.7 powder from Example 19 that had been heated to 800°C for 2 hr was used for Example 46; a second portion was calcined at 900°C for 8 hr to form the fully crystallized sample used in Example 47.

| Example | 46 | 47 |
|---|---|---|
| Wt % metaphosphate glass | 60 | 60 |
| Wt % partially crystallized BAPOS | 40 | -- |
| Wt % fully crystallized BAPOS | -- | 40 |
| dielectric constant | 4.4 | 4.2 |
| dielectric loss (%) | 0.12 | 0.11 |
| thermal coefficient of expansion (ppm/°C) | 7.6 | 7.5 |

SEM micrographs indicate no significant differences in the microstructures of multilayer tapes made from either partially crystallized or fully crystallized BAPOS powders. As illustrated in the above table, the dielectric constant, dielectric loss and thermal coefficient of expansion of these two dielectric-glass composites are almost identical.

Examples 48 to 51

COMPARISON OF SINTERING, DIELECTRIC, AND THERMAL EXPANSION PROPERTIES OF MULTILAYER TAPES MADE FROM PARTIALLY CRYSTALLIZED AND FULLY CRYSTALLIZED BAPOS 15/15/70

Four multilayer tapes were formulated using the process described in Example 33 but with a firing temperature of 850°C to illustrate that the temperature of formation of the β-cristobalite BAPOS phase can be reduced to 850°C by mixing amorphous or partially crystalline BAPOS powder with glasses. BAPOS powder used for these examples having composition of 15/15/70 was synthesized using the procedure described in Example 16. Partially crystallized BAPOS was obtained by calcining amorphous BAPOS at 500°C and 600°C for 4 h whereas fully crystallized BAPOS was calcined at 1000°C for 4 h.

| Example | 48 | 49 | 50 | 51 |
|---|---|---|---|---|
| Wt % borosilicate glass | 50 | 50 | -- | -- |
| Wt % calcium zinc silicate glass | -- | -- | 60 | 60 |
| Wt.% amorphous BAPOS | 50 | -- | 40 | -- |
| Wt % fully crystallized BAPOS | -- | 50 | -- | 40 |
| dielectric constant | 3.74 | 3.84 | 5.18 | 5.07 |
| dielectric loss (%) | 0.09 | 0.076 | 0.15 | 0.13 |
| thermal coefficient of expansion (ppm/°C) | 5.4 | 5.6 | 7.6 | 7.9 |

EP 0 538 397 B1

SEM micrographs of sintered parts show no significant differences in sintered densities between parts made with amorphous or crystalline BAPOS. The formation of stabilized $\beta$-cristobalite BAPOS for parts made by mixing partially crystallized BAPOS and either borosilicate or calcium zinc silicate glasses were confirmed by X-ray diffraction and TMA. Temperatures higher than 1000°C are needed to convert amorphous BAPOS to crystalline BAPOS without the addition of glass. The addition of the glass phase allowed the transformation of amorphous to crystalline BAPOS at a temperature of 850°C. As illustrated in the above Table, the dielectric constant, dielectric loss and temperature coefficient of expansion of these glass composites are almost identical.

Examples 52 and 53

DEMONSTRATION OF SINTERING, DIELECTRIC AND THERMAL EXPANSION PROPERTIES OF MULTILAYER TAPES MADE FROM 30/10/60 BAPOS and 17/17/66 BAPOS

Two multilayer tapes were formulated using the process described in Example 33 but with calcination at 1000°C for 1 h to illustrate that BAPOS powder made by the procedure described in Example 16 can sinter to a dense body without the addition of glass powder.

| Example | 52 | 53 |
|---|---|---|
| 30/10/60 BAPOS | 100 | -- |
| 17/17/66 BAPOS | -- | 100 |
| dielectric constant | 3.9 | 3.8 |
| dielectric loss (%) | 0.13 | 0.08 |
| thermal coefficient of expansion (ppm/°C) | 7.9 | 6.3 |

SEM cross-section micrographs of sintered parts show dense microstructures for both BAPOS compositions. Dielectric and thermal expansion properties of multilayer tape parts are similar to those of fired pellets with the same BAPOS composition.

**Claims**

1. A crystalline boron aluminum silicon phosphate composition having a $\beta$-cristobalite crystal structure, a dielectric constant less than about 5.0, and a dielectric loss of less than about 0.5%, said composition comprising:
    12 to 70% of $BPO_4$,
    2 to 88% of $AlPO_4$,
    0 to 77% of $SiO_2$ on a molar basis;
    said composition being within regions $A_1$ and $A_2$ of the ternary phase diagram of Figure 1.

2. A composition according to Claim 1 comprising additional $BPO_4$, said composition being within region B of the ternary phase diagram of Figure 1.

3. A composition comprising at least about 15% of a composition according to Claim 1 or 2, balance glass selected from the group of borosilicate, phosphate, silicate and aluminosilicate glasses.

4. A composition according to Claim 1 or 2 comprising an additional dielectric component selected from the group alumina, quartz, aluminum phosphate, aluminum nitride, boron nitride, fused silica, polycrystalline cordierite, mullite, enstatite, anorthite, spodumene and mixtures thereof.

5. A composition according to Claim 1 or 2 comprising, additionally, a glass selected from the group of borosilicate, phosphate, silicate and aluminosilicate glasses and a dielectric component selected from the group alumina, quartz, aluminum phosphate, aluminum nitride, boron nitride, fused silica, polycrystalline cordierite, mullite, enstatite, anorthite, spodumene and mixtures thereof.

6. A composition according to Claim 1 or 2 comprising up to about 10% of a glassy phase formed from the reaction of $BPO_4$, $AlPO_4$ and $SiO_2$.

20

EP 0 538 397 B1

7. A green tape comprising a composition according to Claim 1 or 2 dispersed in a polymer binder wherein the weight ratio of inorganic solids to polymer is about 4:1 to 18:1.

8. A green tape comprising a composition according to Claim 7 in a polymer binder with at least one dielectric component selected from alumina, quartz, aluminum phosphate, aluminum nitride, boron nitride, silica, mullite, enstatite, anorthite, spodumene and cordierite wherein the weight ratio of inorganic solids to polymer is about 4:1 to 18:1.

9. A thick film paste comprising a composition according to Claim 1 or 2 dispersed in a polymer binder wherein the weight ratio of inorganic solids to polymer is about 4:1 to 18:1.

10. A thick film paste comprising a composition according to Claim 9 in a polymer binder with at least one dielectric component selected from alumina, quartz, aluminum phosphate, aluminum nitride, boron nitride, silica, mullite, enstatite, anorthite, spodumene and cordierite wherein the weight ratio of inorganic solids to polymer is about 4:1 to 18:1.

11. A method for making a composition according to Claim 1 or 2 comprising:
    (i) forming an aqueous dispersion of these oxides, or precursors thereof, on a molar basis:
        6 to 35% of $B_2O_3$,
        2 to 44% of $Al_2O_3$,
        0 to 77% of $SiO_2$, and
        12 to 50% of $P_2O_5$; and
    (ii) heating the dispersion of step (i) at a temperature of about 600° to 1200°C for a time sufficient to remove all volatiles.

12. An electronic device that contains single or multilayer electronic circuitry comprising a composition according to any one of Claims 1 to 6 which has been densified.

**Patentansprüche**

1. Kristalline Bor/Aluminium/Silicium-Phosphat-Zusammensetzung mit einer $\beta$-Cristobalit-Kristallstruktur, einer Dielektrizitätskonstante von Weniger als etwa 5,0 und einem dielektrischen Verlust von weniger als etwa 0,5 %, wobei die Zusammensetzung umfaßt:
    12 bis 70 % $BPO_4$
    2 bis 88 % $AlPO_4$
    0 bis 77 % $SiO_2$ auf einer molaren Basis;
    wobei die Zusammensetzung sich in den Bereichen $A_1$ und $A_2$ des ternären Phasendiagramms der Figur 1 befindet.

2. Zusammensetzung gemäß Anspruch 1, die zusätzliches $BPO_4$ umfaßt, wobei die Zusammensetzung sich in dem Bereich B des ternären Phasendiagramms der Figur 1 befindet.

3. Zusammensetzung, die wenigstens etwa 15 % einer Zusammensetzung gemäß Anspruch 1 oder 2 und als Rest Glas umfaßt, ausgewählt aus der Gruppe bestehend aus Borsilicat-, Phosphat-, Silicat- und Aluminiumsilicat-Gläsern.

4. Zusammensetzung gemäß Anspruch 1 oder 2, umfassend eine zusätzliche dielektrische Komponente, ausgewählt aus der Gruppe bestehend aus Aluminiumoxid, Quarz, Aluminiumphosphat, Aluminiumnitrid, Bornitrid, Quarzglas, polykristallinem Cordierit, Mullit, Enstatit, Anortit, Spodumen und deren Mischungen.

5. Zusammensetzung gemäß Anspruch 1 oder 2, zusätzlich umfassend ein Glas, ausgewählt aus der Gruppe bestehend aus Borsilicat-, Phosphat-, Silicat- und Aluminiumsilicat-Gläsern und eine dielektrische Komponente, ausgewählt aus der Gruppe bestehend aus Aluminiumoxid, Quarz, Aluminiumphosphat, Aluminiumnitrid, Bornitrid, Quarzglas, polykristallinem Cordierit, Mullit, Enstatit, Anortit, Spodumen und deren Mischungen.

21

**6.** Zusammensetzung gemäß Anspruch 1 oder 2, die bis zu etwa 10 % einer glasartigen Phase umfaßt, die durch die Reaktion von $BPO_4$, $AlPO_4$ und $SiO_2$ gebildet wird.

**7.** Grünband, umfassend eine Zusammensetzung gemäß Anspruch 1 oder 2, die in einem polymeren Bindemittel dispergiert ist, worin das Gewichtsverhältnis von anorganischen Feststoffen zu Polymer etwa 4:1 bis 18:1 ist.

**8.** Grünband, umfassend eine Zusammensetzung gemäß Anspruch 7 in einem polymeren Bindemittel mit wenigstens einer dielektrischen Komponente, ausgewählt aus Aluminiumoxid, Quarz, Aluminiumphosphat, Aluminiumnitrid, Bornitrid, Siliciumdioxid, Mullit, Enstatit, Anortit, Spodumen und Cordierit, worin das Gewichtsverhältnis von anorganischen Feststoffen zu Polymer etwa 4:1 bis 18:1 ist.

**9.** Dickfilm-Paste, umfassend eine Zusammensetzung gemäß Anspruch 1 oder 2, die in einem polymeren Bindemittel dispergiert ist, worin das Gewichtsverhältnis von anorganischen Feststoffen zu Polymer etwa 4:1 bis 18:1 ist.

**10.** Dickfilm-Paste, umfassend eine Zusammensetzung gemäß Anspruch 9 in einem polymeren Bindemittel mit wenigstens einer dielektrischen Komponente, ausgewählt aus Aluminiumoxid, Quarz, Aluminiumphosphat, Aluminiumnitrid, Bornitrid, Siliciumdioxid, Mullit, Enstatit, Anortit, Spodumen und Cordierit, worin das Gewichtsverhältnis von anorganischen Feststoffen zu Polymer etwa 4:1 bis 18:1 ist.

**11.** Verfahren zur Herstellung einer Zusammensetzung gemäß Anspruch 1 oder 2, umfassend:
(i) Bildung einer wäßrigen Dispersion der folgenden Oxide oder deren Vorläuferverbindungen, auf molarer Basis:
6 bis 35 % $B_2O_3$
2 bis 44 % $Al_2O_3$
0 bis 77 % $SiO_2$ und
12 bis 50 % $P_2O_5$, und
(ii) Erhitzen der Dispersion der Stufe (i) bei einer Temperatur von etwa 600 °C bis 1200 °C während einer Zeitspanne, die ausreichend ist, um alle flüchtigen Bestandteile zu entfernen.

**12.** Elektronische Vorrichtung, die eine elektronische Einschichten- oder Mehrschichten-Schaltungsanordnung enthält, umfassend eine Zusammensetzung gemäß irgendeinem der Ansprüche 1 bis 6, die verdichtet worden ist.

**Revendications**

**1.** Une composition cristalline de phosphate de borealumininium-silicium ayant une structure cristalline de $\beta$-cristobalite, une constante diélectrique inférieure à environ 5,0 et une perte diélectrique inférieure à environ 0,5 %, ladite composition comprenant :
12 à 70 % de $BPO_4$,
2 à 88 % de $AlPO_4$,
0 à 77 % de $SiO_2$ en proportions molaires ; ladite composition s'inscrivant dans les régions $A_1$ et $A_2$ du diagramme ternaire de phases de la Figure 1.

**2.** Une composition selon la revendication 1, comprenant du $BPO_4$ supplémentaire, ladite composition s'inscrivant dans la région B du diagramme ternaire de phases de la Figure 1.

**3.** Une composition comprenant au moins environ 15 % d'une composition selon la revendication 1 ou 2, et le reste d'un verre choisi dans le groupe des verres de borosilicate, de phosphate, de silicate et d'aluminosilicate.

**4.** Une composition selon la revendication 1 ou 2, comprenant un constituant diélectrique supplémentaire choisi dans le groupe formé par l'alumine, le quartz, le phosphate d'aluminium, le nitrure d'aluminium, le nitrure de bore, la silice fondue, la cordiérite polycristalline, la mullite, l'enstatite, l'anorthite, le spodumène et leurs mélanges.

**5.** Une composition selon la revendication 1 ou 2, comprenant, de plus, un verre choisi dans le groupe des verres de borosilicate, de phosphate, de silicate et d'aluminosilicate, et un constituant diélectrique choisi dans le groupe formé par l'alumine, le quartz, le phosphate d'aluminium, le nitrure d'aluminium, le nitrure de bore, la silice fondue, la cordiérite polycristalline, la mullite, l'enstatite, l'anorthite, le spodumène et leurs mélanges.

**6.** Une composition selon la revendication 1 ou 2, comprenant jusqu'à environ 10 % d'une phase vitreuse formée par la réaction de $BPO_4$, $AlPO_4$ et $SiO_2$.

**7.** Une bande crue comprenant une composition selon la revendication 1 ou 2 dispersée dans un liant polymère, dans laquelle le rapport en poids des matières solides minérales au polymère est d'environ 4:1 à 18:1.

**8.** Une bande crue comprenant une composition selon la revendication 7 dans un liant polymère avec au moins un constituant diélectrique choisi parmi l'alumine, le quartz, le phosphate d'aluminium, le nitrure d'aluminium, le nitrure de bore, la silice, la mullite, l'enstatite, l'anorthite, le spodumène et la cordiérite, dans laquelle le rapport en poids des matières solides minérales au polymère est d'environ 4:1 à 18:1.

**9.** Une pâte pour couches épaisses comprenant une composition selon la revendication 1 ou 2 dispersée dans un liant polymère, dans laquelle le rapport en poids des matières solides minérales au polymère est d'environ 4:1 à 18:1.

**10.** Une pâte pour couches épaisses comprenant une composition selon la revendication 9 dans un liant polymère avec au moins un constituant diélectrique choisi parmi l'alumine, le quartz, le phosphate d'aluminium, le nitrure d'aluminium, le nitrure de bore, la silice, la mullite, l'enstatite, l'anorthite, le spodumène et la cordiérite, dans laquelle le rapport en poids des matières solides minérales au polymère est d'environ 4:1 à 18:1.

**11.** Un procédé pour préparer une composition selon la revendication 1 ou 2, consistant à
(i) former une dispersion aqueuse de ces oxydes, ou de précurseurs de ceux-ci, en proportions molaires :
6 à 35 % de $B_2O_3$,
2 à 44 % de $Al_2O_3$, 0 à 77 % de $SiO_2$, et
12 à 50 % de $P_2O_5$ ; et

(ii) chauffer la dispersion de l'étape (i) à une température d'environ 600° à 1200°C pendant un temps suffisant pour éliminer toutes les substances volatiles.

**12.** Un dispositif électronique qui contient un circuit électronique monocouche ou multicouche comprenant une composition selon l'une quelconque des revendications 1 à 6 qui a été densifiée.

FIG.1

SiO$_2$

90

A$_1$

10

C

10

50 B

70

A$_2$

70

90

90

AlPO$_4$

BPO$_4$

FIG.2